# EUROPÄISCHE PATENTSCHRIFT

(11) **EP 0 585 543 B1**
(45) Veröffentlichungstag und Bekanntmachung des Hinweises auf die Patenterteilung: **21.08.1996**
(21) Anmeldenummer: 93108812.4
(22) Anmeldetag: 01.06.1993
(51) Int. Cl.: F16L 55/033, F16L 3/12

(54) **Rohrbefestigungsvorrichtung mit einer Fixier- und einer Stützschelle**
Fastening device for pipes consisting of a fixing clamp and a support
Dispositif pour fixer des tuyaux au moyen d'un collier de fixation et d'un collier de support

(30) Priorität: 31.08.1992 DE 4228961
(43) Veröffentlichungstag der Anmeldung: 09.03.1994
(73) Patentinhaber: E. Missel GmbH & Co., D-70374 Stuttgart (DE)
(72) Erfinder: Schäfer, Wolfgang, W-7000 Stuttgart 50 (DE)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) Entgegenhaltungen:
- EP-A- 0 413 883
- EP-A- 0 582 354
- NL-A- 9 201 410
- US-A- 3 856 245

## Beschreibung

Die vorliegende Erfindung betrifft eine Rohrbefestigungsvorrichtung mit einer ein Rohr fest umspannenden Fixierschelle und einer das Rohr mit einer vorgegebenen Toleranz umgebenden Stützschelle, welche an einem Gegenstand, insbesondere einer Wand befestigbar ist und mit ihrer einen als Stützfläche ausgebildeten Stirnseite gegen eine axial gegenüberliegende, als Tragfläche ausgebildete Stirnseite der Fixierschelle angedrückt ist und dadurch über die Fixierschelle das Rohr trägt, wobei das Material wenigstens im Bereich der Stütz-und/oder Tragfläche schalldämmende Eigenschaften hat und vorzugsweise gummielastisch ist.

Eine Rohrbefestigungsvorrichtung der erläuterten Art ist in der älteren EP-A-0 582 354 beschrieben. Diese Anmeldung, die gemäß Avt. 54(3) EPÜ für alle benannten Vertragsstaaten mit Ausnahme von Luxemburg Zitiert wird, hat als prioritäts begründete Anmeldung die NL-A-9201410 (05.08.92). Dabei wird die Fixierschelle, die aus einem metallischen Schellenelement und einem zwischen diesem Schellenelement und der Rohrwandung gelegenen elastischen Element besteht, am Rohr verspannt. Das elastische Element besitzt auf der Seite der Rohrwandung eine Mehrzahl von in Umfangsrichtung verlaufenden Rippen, deren radiale Höhe etwa zumindest der Hälfte der radialen Erstreckung des elastomeren Elementes entspricht.

Die Stützschelle besteht ebenfalls aus einem metallischen Schellenelement und einem zwischen diesem Schellenelement und der Rohrwandung vorgesehenen elastomeren Element, wobei die radiale erstreckung der Stützschelle etwa der radialen Erstreckung der Fixierschelle entspricht. Die Stützschelle ist nicht durch einen testen Klemmsitz mit dem Rohr verbunden, sondern verhältnismäßig locker angebracht, d. h. nicht eng genug um das Rohr herumgelegt, um das Rohr daran zu hindern, unter dem Einfluß der Schwerkraft nach unten durch die Schelle hindurch zu rutschen. Zwischen den rohrseitigen Rippen der Stützschelle und dem Rohr besteht kaum ein Kontakt.

Bei nichtkonzentrischer Anordnung von Stütz- und Fixierschelle, d. h. dann, wenn das Rohr und damit auch die Fixierschelle bezüglich der an der Wand befestigten Stützschelle seitlich verschoben sind, treten bei dieser Anordnung die bereits geschilderten Nachteile auf.

Rohrbefestigungsvorrichtungen dieser Art werden beispielsweise zur Befestigung von Abwasserrohren an Hausmauern verwendet, um eine Körperschallentkoppelung zwischen dem Abwasserrohr und der Mauer zu erreichen. Bei einer Befestigung eines Rohres mit einer Rohrbefestigungsvorrichtung ohne schalldämmende Eigenschaften werden die Geräusche, die beim Durchfließen des Abwasserrohres entstehen über die feste Verbindung sehr gut zur Mauer weitergeleitet, und sind dadurch im gesamten Gebäude störend warzunehmen. Um dies zu verhindern, ist es bekannt, das Rohr in bestimmten Abständen mit fest umspannenden Fixierschellen zu umgeben, die nach Einführen des Rohres in einer mauerseitig befestigte Stützschelle auf dieser aufliegt, wodurch die Stützschelle die Fixierschelle mit dem Rohr trägt. Die Stützschelle hat dabei einen Innendurchmesser, der größer ist als der Außendurchmesser des Rohres, so daß das Rohr und die Stützschelle nicht miteinander in Kontakt stehen.

Dadurch findet keine Übertragung der Abwassergeräusche über das gut leitende, feste Material der Stützschelle zur Mauer hin statt. Die Bereiche uer Stütz- und/oder Fixierschelle, die miteinander in Verbindung stehen, sind aus Materialien mit schalldämmenden Eigenschaften, beispielsweise Gummi ausgebildet, so daß dadurch die Übertragung der Geräusche vom Rohr zur Stützschelle abgedämpft werden.

Üblicherweise ist die Stützfläche der Stützschelle als das Rohr umgebende Stützlippen ausgebildet, da dadurch eine gute akustische Entkopplung zwischen der Fixierschelle und der Stützschelle erreicht wird. Für die einwandfreie Funktion der Schalldämmung ist eine konzentrische Anordnung der beiden Schellen notwendig. Ist das Rohr und damit auch die Fixierschelle gegenüber der Stützschelle verschoben angeordnet, wie das bereits bei der Montage oder im Verlaufe der Zeit durch Einwirkungen von außen geschehen kann, so hat dies zur Folge, daß die Außenkante der Fixierschelle an einer Seite des Rohres über die Stützschelle radial hinausragt, während sie an der anderen Seite des Rohres nur noch an einem Teil der Stützschelle, beispielsweise nur noch auf einer Stützlippe aufliegt. Das bedeutet, daß die Stützschelle ungleichmäßig mit dem Gewicht des Rohres belastet wird, was dazu führt, daß die Stützlippen mit der Zeit verformt und zusammengedrückt werden, wodurch sie ihre schalldämmende Wirkung verlieren. Die ungleiche Belastung der Stützschelle kann schließlich dazu führen, daß die Stützschelle noch weiter zum Rohr hin verschoben wird und unter Druck an diesem zur Anlage kommt, so daß die Abwassergeräusche direkt über die Stützschelle zur Mauer übertragen werden.

Aufgabe der Erfindung ist es, eine Rohrbefestigungsvorrichtung anzugeben, bei der auch bei nicht konzentrischer Anbringung der Stützschelle gegenüber der Fixierschelle eine einwandfreie Schalldämmung gewährleistet ist.

Gelöst wird diese Aufgabe nach der Erfindung durch die Merkmale des Patentanspruchs 1.

Nach einer bevorzugten Ausführungsform der Erfindung besteht die Fixierschelle und/oder die Stützschelle jeweils aus einem steifen Schellenelement und einem Elastomerelement, welches an der Stirnseite des benachbarten Schellenelements anliegt. Durch die Aufteilung der Schellen in zwei getrennte Elemente mit verschiedenen Materialeigenschaften kann zum einen die notwendige Festigkeit der Fixier- und der Stützschelle erreicht werden, wobei gleichzeitig die zwischen den beiden Schellen benötigte schalldämmende Eigenschaft gewährleistet ist. Bevorzugt sind beide, einander zugewandte Stirnseiten der Schellenelemente aus einem Elastomerelement gebildet, da dadurch eine besonders gute Schalldämmung erreicht wird. Es kann jedoch in bestimmten Fällen auch ausreichen, wenn nur die Stirnseite einer Schelle als Elastomerelement ausgebildet ist, so daß dieses an der steifen Stirnseite des benachbarten Schellenelements anliegt.

Nach einer weiteren vorteilhaften Ausführungsform der Erfindung liegt die Innenseite zumindest eines der steifen Schellenelemente im wesentlichen vollständig an dem zugeordneten Elastomerelement an. Dadurch hat das steife Schellenelement der Fixierschelle keinen direkten Kontakt zum Rohr, so daß auch durch das zusammengepreßte Elastomerelement der Fixierschelle schon eine teilweise Schalldämmung erfolgt. Im Falle der Stützschelle, die bei konzentrischer Anbringung das Rohr mit einer vorgegebenen Toleranz umgibt, verhindert das an der Innenseite angebrachte Elastomerelement bei einer radialen Verschiebung der Stützschelle den direkten Kontakt des steifen Schellenelements mit dem Rohr, der zu einer deutlichen Erhöhung der zur Mauer hin übertragenen Geräusche führen würde.

Bevorzugt besteht zumindest eines der Elastomerelemente aus Gummi, insbesondere aus Profilgummi. Durch die Verwendung von beispielsweise gerippten oder genoppten Innenflächen der Elastomere werden die Kontaktflächen zwischen den Elastomeren und dem Rohr verkleinert, wodurch die schalldämmenden Eigenschaften weiter verbessert werden.

Bevorzugt ist zumindest eines der steifen Schellenelemente aus Metall hergestellt. Dadurch kann eine einfache Herstellung bei gleichzeitiger Rohrstabilität gewährleistet werden.

Bevorzugt weist zumindest eines der steifen Schellenelemente ein im wesentlichen flachstabförmiges Profil auf. Durch diese handelsübliche Ausführungsform ist eine besonders kostengünstige Herstellung einer erfindungsgemäß ausgebildeten Rohrbefestigungsvorrichtung möglich.

Nach einer weiteren vorteilhaften Ausführungsform weist zumindest eines der steifen Schellenelemente einen Ringflansch auf, der sich von der, dem anderen Schellenelement zugewandten Stirnseite radial nach außen erstreckt und axial dem anderen Schellenelement gegenüberliegt. Nach dieser Ausführungsform können die sich gegenüberliegenden Trag- und Stützflächen besonders breit und gleichzeitig besonders stabil ausgebildet werden. Dadurch ist auch bei einer besonders weiten Verschiebung der Stützschelle gegenüber dem Rohr eine einwandfreie Schalldämmung gegeben.

Weitere vorteilhafte Ausführungsformen sind in den Unteransprüchen angegeben.

Der Vorteil der Erfindung liegt darin, daß auch bei einer weiten Verschiebung der Stützschelle gegenüber dem Rohr und damit gegenüber der Fixierschelle die Stützfläche über ihren gesamten Umfang vollständig an der Tragfläche anliegt. Dadurch ist gewährleistet. daß der die Stützfläche bildende Bereich der Stützschelle immer gleichmäßig durch das Gewicht des Rohres belastet ist und somit keine Verformungen bzw. ungewöhnliche Komprimierungen des gummielastischen Materials auftreten können. Auf diese Weise ist sowohl bei konzentrischer als auch bei nicht konzentrischer Anbringung der Stützschelle die gewünschte Schalldämmung zwischen Rohr und Mauer bei einwandfreier Halterung gegeben.

Während bekannte Abwasserrohrstützen (Fallrohrstützen) ein spezielles zusätzliches Rohrelement (Rohrstück mit integriertem Kragen) benötigen, kann die erfindungsgemäße Rohrbefestigungsvorrichtung an jeder beliebigen Rohrposition befestigt werden.

Die Erfindung wird nachfolgend anhand eines Ausführungsbeispiels unter Bezugnahme auf die Zeichnung erläutert; in dieser zeigt:
- Fig. 1: eine Rohrbefestigungsvorrichtung wie sie aus dem Stand der Technik bekannt ist,
- Fig. 2: einen Querschnitt durch eine Rohrbefestigungsvorrichtung nach Fig. 1 mit einer konzentrisch ausgerichteten und einer verschobenen Stützschelle und
- Fig.3: einen Querschnitt durch eine erfindungsgemäß ausgebildete Rohrbefestigungsvorrichtung mit einem konzentrisch ausgerichteten und einem verschobenen Stützring.

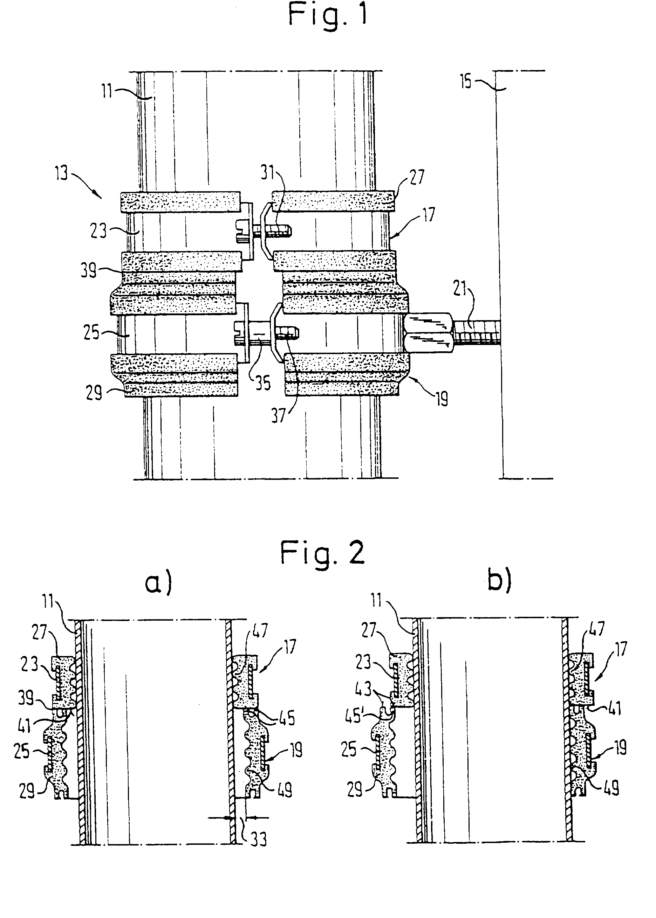

Fig. 1 zeigt ein Rohr 11, das über eine Rohrbefestigungsvorrichtung 13 an einer Wand 15 befestigt ist. Die Rohrbefestigungsvorrichtung 13 besteht aus einer Fixierschelle 17 und einer Stützschelle 19, die über eine Halterung 21 an der Wand 15 befestigt ist.

Die Fixierschelle 17 und die Stützschelle 19 bestehen jeweils aus einem steifen Schellenelement 23, 25, die als Spannschellen ausgebildet sind, und aus Elastomerelementen 27, 29, die von den steifen Schellenelementen 23, 25 umfaßt werden.

Das Elastomerelement 27 wird von dem steifen Schellenelement 23 über ein Schraube 31 so fest um das Rohr 11 gespannt, daß aufgrund der Reibung zwischen dem Rohr 11 und dem Elastomerelement 27 keine Axialbewegung des Rohres gegenüber der Fixierschelle 17 möglich ist. Das Elastomerelement 27 liegt mit seiner unteren Stirnseite auf der oberen Stirnseite des Elastomerelements 29 auf. Das Elastomerelement 29 wird von dem steifen Schellenelement 25 nicht an das Rohr 11 gedrückt, sondern ist über seinen ganzen Umfang vom Rohr 11 um eine Toleranz 33 (Fig. 2) entfernt. Dazu ist ein Distanzstück 35 zwischen die beiden freien Enden des steifen Schellenelements 25 angeordnet, wodurch bei Verspannung des steifen Schellenelements 25 durch eine Schraube 37 ein bestimmter Mindestinnendurchmesser der Stützschelle 19, der größer ist als der Außendurchmesser des Rohrs 11, nicht unterschritten werden kann.

Durch das Aufliegen der fest mit dem Rohr 11 verbundenen Fixierschelle 17 auf der an der Mauer 15 befestigten Stützschelle 19 ist das Rohr 11 bezüglich einer axialen Bewegung nach unten und bezüglich einer radialen Bewegung innerhalb der Toleranz 33 gesichert.

Geräusche, die beispielsweise durch durch das Rohr 11 strömende Abwässer erzeugt werden, pflanzen sich, leicht vermindert durch das komprimierte Elastomerelement 27, zu der Übergangsstelle 39 zwischen dem Elastomer 27 und dem Elastoiner 29 fort. Die untere Stirnseite des Elastomerelements 27 bildet eine Tragfläche 41 (Fig. 2), die im wesentlichen unkomprimiert ist und daher schalldämmende Eigenschaften hat. Die obere Stirnseite des Elastomers 29 bildet eine Stützfläche 43 (Fig. 2), die wie das gesamte Elastomerelement 29 aus unkomprimierten Material besteht und daher besonders gute schalldämmende Eigenschaften besitzt.

Die in das Elastomerelement 27 geleiteten Schallwellen werden nur zum Teil über die Übergangsstelle 39 in das Elastomerelement 29. weitergeführt, wo sie dann zum größten Teil absorbiert werden. Auf diese Weise entsteht eine gute Schallisolierung zwischen dem Rohr 11 und der Wand 15.

Fig. 2 a zeigt einen Querschnitt durch eine Rohrbefestigungsvorrichtung nach Fig. 1, bei der, wie in Fig. 1, die Stützschelle 19 konzentrisch mit der Fixierschelle 17 und damit dem Rohr 11 ausgerichtet ist.

An der oberen Stirnseite des Elastomerelements 29 sind zwei Stützlippen 45 ausgebildet, die die Stützfläche 43 der Stützschelle 19 bilden. Die Innenseiten der Elastomerelemente 27, 29 sind mit Rippenprofilen 47, 49 versehen. Zwischen dem Rippenprofil 49 und dem Rohr 11 ist die Toleranz 33 erkennbar.

In Fig. 2b ist die Stützchelle 19 gegenüber dem Rohr 11 und der Fixierschelle 17 um die Toleranz 33 maximal nach links verschoben dargestellt. Auf der rechten Seite kommt dadurch das Profil 49 am Rohr 11 zur Anlage.

Auf der linken Seite befindet sich die Stützschelle 19 so weit vom Rohr 11 entfernt, daß nur noch eine Stützlippe 45' an der Unterseite der Fixierschelle 17 anliegt.

Diese deutlich stärkere Belastung der Stützlippe 45' führt zu einer Deformierung und Komprimierung des oberen Bereiches des Elastomerlementes 29, wodurch die schalldämmenden Eigenschaften der Stützschelle 19 deutlich verschlechtert werden. Im Extremfall kann die Fixierschelle 17 auf der linken Seite des Rohres 11 in den Zwischenraum zwischen dem Rohr 11 und der Stützschelle 29 eindringen, wodurch die rechte Seite der Stützschelle 19 an das Rohr 11 gedrückt wird und somit auch hier über den komprimierten Gummi Schallwellen zum steifen Schellenelement 25 und schließlich zur Wand 15 geleitet werden.

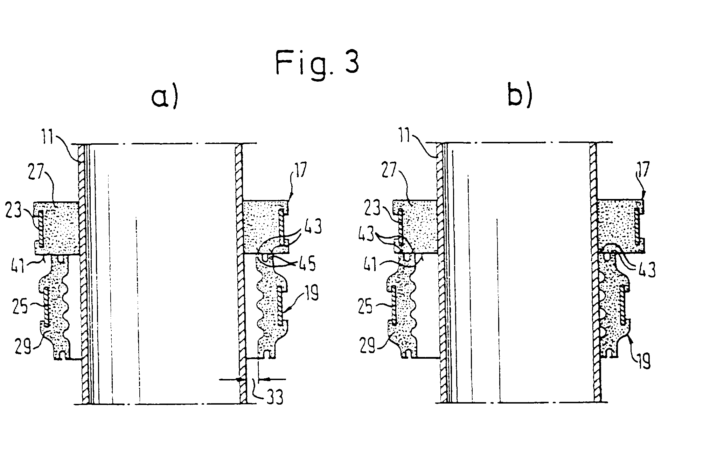

Fig. 3 zeigt eine Querschnitt durch eine erfindungsgemäß ausgebildete Rohrbefestigungsvorrichtung.

In Fig. 3a ist die Stützschelle 19 wiederum konzentrisch zur Fixierschelle 17 und dem Rohr 11 angeordnet. Das Elastomerelement 27 ist so breit ausgebildet, daß sich die Tragfläche 41 deutlich radial über den äußeren Rand der Stützfläche 43 hinauserstreckt. Da der Bereich des Elastomerelements 27 zwischen dem steifen Schellenelement 23 und dem Rohr 11 komprimiert ist, weist er eine genügend hohe Festigkeit auf, um als Tragelement verwendet werden zu können.

In Fig. 3 b ist die Stützschelle 19 gegenüber dem Rohr 11 maximal um die Toleranz 33 nach links verschoben. Man erkennt, daß die Stützflächen 43 auch in der links dargestellten, radial äußersten Stellung noch vollständig an der Tragfläche 41 anliegen. Das bedeutet, daß die Stützfläche 43 über ihren gesamten Umfang vollständig an der Tragfläche 43 anliegen, wodurch auch bei maximal radial verschobener Stützschelle 19 eine optimale Schalldämmung gewährleistet ist.

## Patentansprüche

1. Rohrbefestigungsvorricntung (13) mit einer ein Rohr (11) fest umspannenden Fixierschelle (17) und einer das Rohr (11) mit einer vorgegebenen Toleranz (33) umgebenden Stützschelle (19), welche an einem Gegenstand, insbesoncere einer Wand (15) befestigbar ist und mit ihrer einen als Stützfläche (43) ausgebildeten Stirnseite gegen eine axial gegenüberliegende, als Tragfläche (41) ausgebildete Stirnseite der Fixierschelle (17) angedrückt ist und dadurch über die Fixierschelle (17) das Rohr (11) trägt, wobei das Material wenigstens im Bereich aer Stütz- und/oder Tragfläche (43,41) schalldämmende Eigenschaften hat und vorzugsweise gummielastisch ist und bei koaxiaier Ausrichtung der Fixierschelle (17), der Stützschelle (19) und des Rohres (11) sich die Tragfläche (41) im wesentlichen über ihren ganzen Umfang so weit radial über die Stützfläche (43) hinaus erstreckt, das bei um die Toleranz (33) gegenüber dem Ronr (11) radial verschobener Stützschelle (19) die Stützfläche (43) über ihren gesamten Umfang noch im wesentlichen vollständig an der Tragfläche (41) anliegt, wobei im montierten Zustand der äußere Durchmesser eines der Fixierschelle (17) zugeordneten steifen Schellenelementes (23) größer ist als der äußere Durchmesser eines der Stützschelle (19) zugeordneten steifen Schellenelementes (25).

2. Rohrbefestigung (13) nach Anspruch 1,
dadurch **gekennzeichnet**,
daß die Fixierschelle (17) und/oder die Stützschelle (19) jeweils aus dem steifen Schellenelement (23, 25) und einem Elastomerelement (27, 29) besteht, welches an der Stirnseite des benachbarten Schellenelements (17, 19) anliegt.

3. Rohrbefestigungsvorrichtung (13) nach Anspruch 2,
dadurch **gekennzeichnet**,
daß die Innenseite zumindest eines der steifen Schellenelemente (23, 25) im wesentlichen vollständig an dem zugeordneten Elastomerelement (27, 29) anliegt.

4. Rohrbefestigungsvorrichtung (13) nach einem oder mehreren der Ansprüche 2 und 3,
dadurch **gekennzeichnet**,
daß zumindest eines der Elastomerelemente (27, 29) vorzugsweise aus Gummi, insbesondere aus Profilgummi besteht.

5. Rohrbefestigungsvorrichtung (13) nach einem oder mehreren der Ansprüche 2 bis 4,
dadurch **gekennzeichnet**,
daß zumindest eines der Elastomerelemente (27, 29) mehrteilig ausgebildet ist.

6. Rohrbefestigungsvorrichtung (13) nach einem oder mehreren der Ansprüche 2 bis 5,
dadurch **gekennzeichnet**,
daß zumindest eines der steifen Schellenelemente (23, 25) aus Metall hergestellt ist.

7. Rohrbefestigungsvorrichtung (13) nach einem oder mehreren der Ansprüch 2 bis 6,
dadurch **gekennzeichnet**,
daß zumindest eines der steifen Schellenelemente (23, 25) ein im wesentlichen flachstabförmiges Profil aufweist.

8. Rohrbefestigungsvorrichtung nach einem der Ansprüche 1 bis 7,
dadurch **gekennzeichnet**,
daß das der Stützschelle (19) zugeordnete Elastomerelement (29) an seiner dem Rohr (11) zugewandten Seite mit Rippen versehen ist, und daß das der Fixierschelle (17) zugeordnete Elastomerelement (27) vollflächig am Rohr (11) anliegt.

## Claims

1. Pipe mounting apparatus comprising a fixing clip (17) which firmly surrounds the pipe (11) and a support clip (19) which surrounds the pipe (11) with a predetermined tolerance (33) and which can be secured to something, in particular to a wall (15), and which is pressed at its one end face formed as a support surface (43) against an axially oppositely disposed end face of the fixing clip (17), which is formed as a carrying surface, and thereby carries the pipe (11) via the fixing clip (17), wherein the material has acoustic insulating characteristics at least in the region of the support surface and/or carrying surface (43, 41) and is preferably rubber-elastic, and wherein, with coaxial alignment of the fixing clip (17), of the support clip (19) and of the pipe (11), the support surface (41) extends over substantially its whole periphery so far radially beyond the support surface (43) that, when the support clip (19) is radially displaced by the amount of the tolerance (33) relative to the pipe (11), the support surface still substantially fully contacts the carrying surface (41) over its entire circumference, and wherein, in the installed state, the outer diameter of a stiff clip element (23) associated with the fixing clip is greater than the outer diameter of a stiff clip element (25) associated with the support clip (19).

2. Pipe mounting (13) in accordance with claim 1, characterised in that the fixing clip (17) and/or the support clip (19) respectively comprise a stiff clip element (23, 25) and an elastomeric element (27, 29), which contacts the end face of the neighbouring clip element (17, 19).

3. Pipe mounting apparatus (13) in accordance with claim 2, characterised in that the inner side of at least one of the stiff clip elements (23, 25) substantially fully contacts the associated elastomeric element (27, 29).

4. Pipe mounting apparatus (13) in accordance with one or more of the claims 2 and 3, characterised in that at least one of the elastomeric elements (27, 29) preferably consists of rubber, in particular of a profiled rubber strip.

5. Pipe mounting apparatus (13) in accordance with one or more of the claims 2 to 4, characterised in that at least one of the elastomeric elements (27, 29) is of multi-part construction.

6. Pipe mounting apparatus (13) in accordance with one or more of the claims 2 to 5, characterised in that at least one of the stiff clip elements (23, 25) is manufactured of metal.

7. Pipe mounting apparatus (13) in accordance with one or more of the claims 2 to 6, characterised in that at least one of the stiff clip elements (23, 25) has a profile (section) substantially resembling a flat bar.

8. Pipe mounting apparatus (13) in accordance with one of the claims 1 to 7, characterised in that the elastomeric element (29) associated with the support clip (19) is provided with ribs at its side facing the pipe (11) and in that the elastomeric element (27) associated with the fixing clip (17) contacts the pipe (11) over its full area.

## Revendications

1. Dispositif (13) pour fixer des tuyaux au moyen d'un collier de fixation (17), qui enserre de façon fixe un tuyau (11), et d'un collier de support (19), qui entoure le tuyau (11) avec un jeu prédéfini (33), que l'on peut fixer sur un objet, en particulier sur une cloison (15) et que l'on peut presser par sa face frontale constituée sous la forme d'une surface d'appui (43) contre une face frontale du collier de fixation (17), constituée en tant que surface portante (41) se trouvant axialement en regard, et qui de cette façon porte le tuyau (11) au moyen du collier de fixation (17), la matière ayant, au moins dans la zone de la surface d'appui et/ou de la surface portante (43, 41), des propriétés qui amortissent les sons et qui est de préférence élastique comme du caoutchouc, et dans lequel la surface portante (41) s'étend, quand le collier de fixation (17), le collier de support (19) et le tuyau (11) sont orientés coaxialement, sensiblement sur tout son pourtour sur la surface d'appui (43) suffisamment loin dans le sens radial pour que la surface d'appui (43), quand le collier de support (19) est décalé radialement par rapport au tuyau (11) de la longueur du jeu (33), repose sur tout son pourtour encore sensiblement complètement sur la surface portante (41), dispositif (13) pour fixer des tuyaux, dans lequel, quand il est monté, le diamètre extérieur d'un élément de collier (23) raide, correspondant au collier de fixation (17), est plus grand que le diamètre extérieur d'un élément de collier (25) raide, correespondant au collier de support (19).

2. Dispositif (13) pour fixer des tuyaux, selon la revendication 1, caractérisé en ce que le collier de fixation (17) et/ou le collier de support (19) consistent respectivement en le même élément raide de collier (23, 25) et un élément élastomère (27, 29), qui repose sur la face frontale de l'élément de collier voisin (17, 19).

3. Dispositif (13) pour fixer des tuyaux, selon la revendication 2, caractérisé en ce que la face intérieure d'au moins l'un des éléments raides de collier (23, 25) repose sensiblement complètement sur l'élément élastomère (27, 29) correspondant.

4. Dispositif (13) pour fixer des tuyaux, selon une ou plusieurs des revendications 2 et 3, caractérisé en ce qu'au moins l'un des éléments élastomères (27, 29) est réalisé de préférence en caoutchouc, de préférence en caoutchouc profilé.

5. Dispositif (13) pour fixer des tuyaux, selon une ou plusieurs des revendications 2 à 4, caractérisé en ce qu'au moins l'un des éléments élastomères (27, 29) est constitué en plusieurs parties.

6. Dispositif (13) pour fixer des tuyaux, selon une ou plusieurs des revendications 2 à 5, caractérisé en ce qu'au moins l'un des éléments raides de collier (23, 25) est fabriqué en métal.

7. Dispositif (13) pour fixer des tuyaux, selon une ou plusieurs des revendications 2 à 6, caractérisé en ce qu'au moins l'un des éléments raides de collier (23, 25) présente un profil qui a sensiblement la forme d'une barre plate.

8. Dispositif (13) pour fixer des tuyaux, selon l'une des revendications 1 à 7, caractérisé en ce que l'élément élastomère associé au collier de support (19) est pourvu, sur sa face tournée vers le tuyau (11) , de nervures et en ce que l'élément élastomère (27), associé au collier de fixation (17), repose complètement sur le tuyau (11).
